# EUROPEAN PATENT SPECIFICATION

(11) **EP 0 895 812 B1**
(45) Date of publication and mention of the grant of the patent: **23.07.2003**
(21) Application number: 98114817.4
(22) Date of filing: 06.08.1998
(51) Int. Cl.: B01J 37/02, B01J 29/06, B01J 29/03, B01D 53/94

(54) **Exhaust gas purifying catalyst and process of producing the same**
Katalysator zur Reinigung von Abgas und Verfahren für seine Herstellung
Catalyseur de purification de gaz d'échappement et procédé pour le produire

(30) Priority: 07.08.1997 JP 21336497
(43) Date of publication of application: 10.02.1999
(73) Proprietor: Mazda Motor Corporation, Aki-gun Hiroshima-ken (JP)
(72) Inventor: Kurokawa, Takahiro, Aki-gun, Hiroshima (JP); Watanabe, Yasuto, Aki-gun, Hiroshima (JP); Ueoka, Toshitsugu, Aki-gun, Hiroshima (JP); Takayama, Osamu, Aki-gun, Hiroshima (JP); Koda, Yuki, Aki-gun, Hiroshima (JP)
(74) Representative: Gossel, Hans K., Dipl.-Ing.

(56) References cited:
- EP-A- 0 466 396
- EP-A- 0 837 118
- WO-A-97/20016
- US-A- 4 968 405
- US-A- 5 292 696

## Description

### BACKGROUND OF THE INVENTION

### 1. Field of the Invention

The invention relates to an exhaust gas recirculation catalyst.

### 2. Description of the Related Art

There have been known catalysts for reducing and purifying nitrogen oxides (NOx) in exhaust gases from a diesel engine in which a lean air-fuel mixture is burnt with an excess air factor (λ) higher than 1 (one). As described in, for example, Japanese Unexamined Patent Publication No.8 - 254407, one of such catalysts contains platinum (Pt) and rhodium (Rh) carried by meso-porous crystalline silicate. This catalyst has been developed with the intention of utilizing meso-pores of the crystalline silicate to shift an activation temperature of the catalyst on the higher side as well as preventing the noble metals from sintering Further, as described in, for example, Japanese Unexamined Patent Publication No. 7-51542, it has been known to utilize an exhaust gas purifying catalyst which is comprised of a mixture of zeolite containing cobalt (Co) and zeolite containing palladium (Pd) to purify harmful emissions such as nitrogen oxides (NOx), hydrocarbons (HC) and carbon monoxide (CO). Cobalt (Co) and palladium (Pd) can be carried by an ion-exchange method or an impregnation method.

When a catalyst is used to reduce and purify nitrogen oxides (NOx) in exhaust gases, hydrocarbons (HC) in the exhaust gas is utilized as a reductant. Exhaust gases from diesel engines contain less hydrocarbons (HC) as a reductant, and, however, a large portion of the hydrocarbons (HC) includes inactive large components such as paraffin and the like (approximately 30% of hydrocarbons having 2 to 3 carbon atoms, approximately 15% of hydrocarbons having 6 to 12 carbon atoms, and approximately 55% of hydrocarbons having 13 to 20 carbon atoms), so as to be hard to work as a reductant.

US-A-5292696 describes that the HC adsorption ability is more improved by separately forming a layer of Pd/H-ZSM-5 zeolite formed by varying firing temperature and time after the ion exchange with Pd and a layer of zeolite other than the above zeolite, e.g. Cu/H-ZSM-5 zeolite ion-exchanged with Cu on the same monolith type carrier

### SUMMARY OF THE INVENTION

It is an objective of the invention to provide an exhaust gas purifying catalyst which captures large hydrocarbons in exhaust gases and crack or modifies them to higher active hydrocarbons suitable as a reductant.

The foregoing objects of the present invention are achieved by providing an exhaust gas purifying catalyst containing a catalytic component comprised of active metals supported on zeolite by an ion-exchange method and a meso-porous composition having an approximately uniform size of meso-pores. The exhaust gas purifying catalyst of the invention shows high NOx conversion efficiency even in a lean air/fuel ratio of atmosphere such as an exhaust gas leaner than approximately 22 (for example exhaust gas containing more than 10% of oxygen from a diesel engine and exhaust gas containing more than 4% of oxygen from a gasoline engine). The reason for this is considered that the catalytic component containing active metals supported on zeolite by an ion-exchange method does an excellent job of cracking large hydrocarbons (HC) in exhaust gases captured by the meso-porous composition having an approximately uniform size of meso-pores to small and highly activated hydrocarbon (HC) such as olefin and the like and the small activated hydrocarbon (HC) reduces nitrogen oxides (NOx) in the exhaust gas.

The term "active metal" used herein shall mean a metal such as transition metals which presents catalytic activity. Platinum (Pt) or platinum (Pt) in combination with a noble metal or a transition metal, such as rhodium (Rh) or Iridium (Ir), is most preferable as the active metal of the exhaust gas purifying catalyst. There are some types of zeolite, such as an MFI-type, β-type and Y(FAU)-type, available as an active metal support material. One of typical meso-pore compositions is silicate having an approximately uniform size (1 - 25 nm) of meso-pores. Most suitable sizes of meso-pore are between 1 and 5 nm, and, in particular, between 2 and 3 nm.

The meso-pore composition may contain ceria supported thereon, which has an effect of improving NOx conversion efficiency of the catalyst. This is because the ceria supported on the meso-pore composition cracks large hydrocarbons (HC) captured by the meso-pore composition and cracking the hydrocarbons (HC) with the active metal is accelerated. It is preferred that the meso-porous composition has a ceria content in terms of a cerium content of 1 to 50 g per one litter of a catalyst support member.

It is also preferable to use a catalytic component comprised of an active metal supported on zeolite without using an ion exchange method together with a catalytic component comprised of an active metal supported on zeolite by an ion exchange method. This type of catalyst improves low temperature catalytic activity for hydrocarbons (HC) and carbon monoxide (CO) as well as restraining NOx conversion efficiency. This is because the catalytic component comprised of an active metal supported on zeolite without using an ion exchange method contributes to conversion of hydrocarbons (HC) at lower temperatures. The utilization may be made of an impregnation method, a vaporization-dry method or a vaporization-solidify method to support an active metal on zeolite.

Accordingly, a more preferred exhaust gas purifying catalyst is comprised of a meso-porous composition having an approximately uniform size of meso-pores which is suitable to capture hydrocarbons (HC) and a catalytic component containing an active metal supported on zeolite by an ion-exchange method to reduce the hydrocarbons (HC) captured by the meso-porous composition.

Another preferred exhaust gas purifying catalyst is comprised of a composition which captures and cracks hydrocarbons (HC) and a catalytic component containing an active metal which reduces nitrogen oxides (NOx) with the cracked hydrocarbons (HC). A meso-porous composition containing ceria supported thereon is suitable as the composition.

The catalytic component comprised of an active metal supported on zeolite by an ion-exchange method and the meso-porous composition having an approximately uniform size of meso-pores may be applied in the form of mixture to a catalyst support member such as a cordierite honeycomb bed, or otherwise, in the form of over and under layers, respectively, on a catalyst support member such as a cordierite honeycomb bed. The multiple layer type catalyst has a tendency to present a higher NOx conversion efficiency than the mixed type catalyst. This is because, in the multiple layer type catalyst, large hydrocarbons (HC) have been captured once by the under meso-porous composite layer which is covered by the active metal supported zeolite layer are cracked at a high probability and on the other hand, in the mixed type catalyst, a large part of large hydrocarbons (HC) even captured by the under meso-porous composite layer are released without being cracked or the catalytic component is apt to be contacted by exhaust gases. While the exhaust gas purifying catalyst comprised of a catalytic component containing an active metal supported on zeolite by an ion-exchange method and a meso-porous composition containing ceria supported thereon may be provided of the mixed type or of the multiple layer type, the mixed type catalyst presents a significantly lower NOx conversion efficiency that the multiple layer type catalyst. Although the reason why is not always evident, it is estimated that there occurs undesirable interaction between the ceria on the meso-porous composite and the active metal on the zeolite. Therefore, the multiple layer type catalyst is more preferable than the mixed type catalyst.

The catalytic component comprised of an active metal supported on zeolite by an ion-exchange method, the catalytic component comprised of an active metal supported on zeolite without using an ion-exchange method, and the meso-porous composition having an approximately uniform size of meso-pores may be applied in the form of mixture to a catalyst support member such as a cordierite honeycomb bed, or otherwise, in the form of over and under layers, respectively, on a catalyst support member such as a cordierite honeycomb bed.

Further, the catalytic component comprised of an active metal supported on zeolite by an ion-exchange method, the catalytic component comprised of an active metal supported on zeolite without using an ion-exchange method, and the meso-porous composition having an approximately uniform size of meso-pores and supporting ceria thereon may be applied in the form of mixture to a catalyst support member such as a cordierite honeycomb bed. Similar to the mixture type catalyst comprised of the catalytic component comprised of an active metal supported on zeolite by an ion-exchange method and the meso-porous composition having an approximately uniform size of meso-pores and supporting ceria thereon, this mixture type catalyst presents a low NOx conversion efficiency. Accordingly, the multiple layer type catalyst is more preferable than the mixed type catalyst.

Each exhaust gas purifying catalyst described above is useful for exhaust gases leaner than an air/fuel ratio of approximately 22 such as, for example, exhaust gas containing more than 10% of oxygen from a diesel engine and exhaust gas containing more than 4% of oxygen from a gasoline engine.

The multiple layer exhaust gas purifying catalyst comprised of a catalytic component by supporting an active metal on zeolite by an ion-exchange method and a meso-porous composition having an approximately uniform size of meso-pores is produced by a process comprising the steps of preparing a catalytic component by supporting an active metal on zeolite by an ion-exchange method, forming an under layer of the meso-porous composition on a catalyst support member, and forming an over layer of the catalytic component over the under layer.

The multiple layer exhaust gas purifying catalyst comprised of a catalytic component by supporting an active metal on zeolite by an ion-exchange method and a meso-porous composition having an approximately uniform size of meso-pores and supporting ceria thereon is produced by a process comprising the steps of preparing a catalytic component by supporting an active metal on zeolite by an ion-exchange method, preparing a meso-porous composition by supporting ceria on a meso-porous composition, forming an under layer of the meso-porous composition on a catalyst support member, and forming an over layer of the catalytic component over the under layer.

The multiple layer exhaust gas purifying catalyst comprised of a first catalytic component supporting an active metal on zeolite, a second catalytic component supporting an active metal on zeolite, and a meso-porous composition is produced by a process comprising the steps of preparing a first catalytic component by supporting an active metal on zeolite by an ion-exchange method, preparing a second catalytic component by supporting an active metal on zeolite without using an ion-exchange method, forming an under layer of the meso-porous composition on a catalyst support member, and forming an over layer of the first and second catalytic components over the under layer.

The multiple layer exhaust gas purifying catalyst comprised of a first catalytic component supporting an active metal on zeolite, a second catalytic component supporting an active metal on zeolite, and a meso-porous composition supporting ceria thereon is produced by a process comprising the steps of preparing a composition by supporting ceria on a meso-porous composite, preparing a first catalytic component by supporting an active metal on zeolite by an ion-exchange method, preparing a second catalytic component by supporting an active metal on zeolite without using an ion-exchange method, forming an under layer of the meso-porous composition on a catalyst support member, and forming an over layer of the first and second catalytic components over the under layer.

In order to support an active metal on zeolite, various other method may be employed such as a vaporization-solidifying method and a spray-dry method and an impregnation method in place of an ion-exchange method.

### BRIEF DESCRIPTION OF THE DRAWINGS

The foregoing and other objects and features of the present invention will be clearly understood from the following detailed description of preferred embodiments when read in conjunction with the accompanying drawings in which:
Figure 1 is a schematic illustration of a mixed type exhaust gas purifying catalyst in accordance with an embodiment of the invention;
Figure 2 is an illustration of a mixed type exhaust gas purifying catalyst in accordance with an embodiment of the invention;
Figure 3 is an illustration of a multiple layer type exhaust gas purifying catalyst in accordance with another embodiment of the invention;
Figure 4 is an illustration of a multiple layer type exhaust gas purifying catalyst in accordance with another embodiment of the invention;
Figure 5 is a graphical diagram showing NOx conversion efficiency for a first group of exhaust gas purifying catalysts;
Figure 6 is a graphical diagram showing T-50 temperature regarding hydrocarbon (HC) and carbon monoxide (CO) for the first group of exhaust gas purifying catalysts;
Figure 7 is an illustration of a mixed type exhaust gas purifying catalyst in accordance with another embodiment of the invention;
Figure 8 is an illustration of a mixed type exhaust gas purifying catalyst in accordance with another embodiment of the invention;
Figure 9 a graphical diagram showing NOx conversion efficiency for a second group of exhaust gas purifying catalysts;
Figure 10 is a graphical diagram showing T-50 temperature regarding hydrocarbon (HC) and carbon monoxide (CO) for the second group of exhaust gas purifying catalysts;
Figure 11 a graphical diagram showing NOx conversion efficiency for a third group of exhaust gas purifying catalysts;
Figure 12 is a graphical diagram showing T-50 temperature regarding hydrocarbon (HC) and carbon monoxide (CO) for the third group of exhaust gas purifying catalysts;
Figure 13 a graphical diagram showing NOx conversion efficiency for a fourth group of exhaust gas purifying catalysts; and
Figure 14 is a graphical diagram showing T-50 temperature regarding hydrocarbon (HC) and carbon monoxide (CO) for the fourth group of exhaust gas purifying catalysts;

### DETAILED DESCRIPTION OF THE PREFERRED EMBODIMENT

Meanings of terms and abbreviations used hereafter are as follows:

The term "Ce carried meso-porous silicate" used hereafter shall mean and refer to meso-porous silicate with metallic cerium carried thereby, the term "Pt ion-exchange carried MFI zeolite" used hereafter shall mean and refer to MFI type zeolite with platinum carried thereby by an ion-exchanging method, and the term "Pt dry-solidify carried MFI zeolite used hereafter shall mean and refer to MFI type zeolite with platinum carried thereby by a drying and solidifying method.

In order to provide a catalyst of the invention, various components were prepared as follows:

### (A) Meso-Porous Silicate

Powdered meso-porous silicate (porous materials of SiO₂ include NaHSi₂O₅ or Si₂O₅) was composed by a hydrothermal crystallization method. The utilization was made of an organic base as a template in order to regulate the diameter of meso-pores. Specifically, A mixture of colloidal silica, tetradethyl-trimethylammonium bromide (template material) and ion-exchanged water was prepared as a meso-porous silicate mixture and sufficiently stirred at a room temperature for three hours. The weight ratio of the silicon (Si) content of colloidal silica, the template material and the ion-exchanged water was 11 : 7 : 660. During stirring the meso-porous silicate mixture, sodium hydroxide (NaOH)was added to adjust a potential of hydrogen (pH) of the mixture to 9 to 11. Thereafter, the mixture was heated to and kept at 120°C for 14 to 20 hours in an autoclave. After separating the meso-porous silicate mixture to a meso-porous silicate powder and a solvent by a centrifugal separator, the meso-porous silicate powder was sufficiently rinsed and burnt at 400°C. The mean diameter of meso-pores was 2.5 nm. The kind and amount of template material and hydrothermal crystallization conditions were changed according to required diameters of meso-pores.

### (B) Ce carried meso-porous silicate

The meso-porous silicate powder was added into a cerium nitrate solution at a weight ratio of cerium and water of 10 : 22). The cerium nitrate solution was made by adding cerium in 20 g water. After stirring the meso-porous silicate powder mixture until the water evaporated, the meso-porous silicate powder was taken out, and then dried and burnt as Ce carried meso-porous silicate.

### (C) Pt ion-exchange carried MFI zeolite

MFI zeolite powder added with 10 to 50 times as much as the MFI zeolite powder of distilled water was heated to 90 to 120°C and then added with a proper amount of platinum-amine complex. The weight ratio of MFI powder and platinum was 10 : 0.037. After keeping the MFI zeolite powder mixture at 90 to 120°C for three hours and rinsing it, the MFI zeolite powder mixture was dried at 120°C and burnt at 200 to 500°C, suitably at 300°C.

### (D) Pt Dry-solidify carried MFI zeolite

Pt dry-solidify carried MFI zeolite was prepared by a spray-dry method. MFI zeolite powder added with distilled water 1 to 10 times as much as the MFI zeolite powder and a proper amount of platinum-amin complex and stirred at a room temperature for two hours. The weight ratio of MIF powder and platinum was 10 : 0.148. The MFI zeolite powder mixture was sprayed with an atomizer into a drying room kept at 140 to 190°C with hot air. MFI zeolite powder, quickly dried by means of contact between drops of the MFI zeolite powder mixture and the hot air, was burnt at 200 to 500°C, suitably at 300°C.

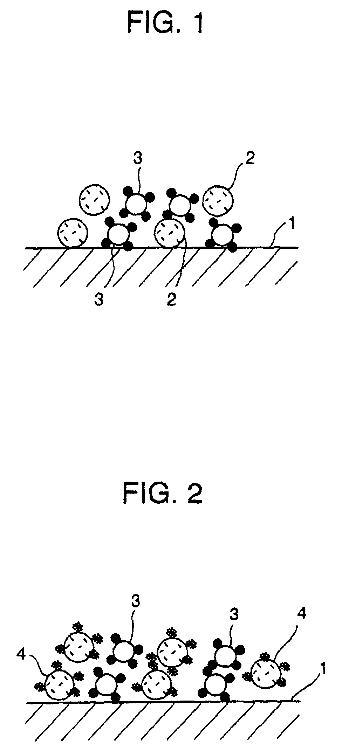

Figure 1 shows a mixed type catalyst of a first example (Ex-I) in accordance with an embodiment of the invention. The catalyst was comprised of a single layer of a mixture of meso-porous silicate 2 and Pt ion-exchange carried MFI zeolite 3 coated on a catalyst support member 1 such as a cordierite honeycomb bed.

The catalyst mixture was prepared by mixing meso-porous silicate and Pt ion-exchange carried MFI zeolite at a weight ratio of 1 : 4 and added with a specified amount of binder such as hydrate alumina and a proper amount of distilled water. After wash-coated on the catalyst support member 1, the coated layer of the mixture slurry was dried at approximately 150°C and further burnt at approximately 300°C. The weight ratio of the total amount of meso-porous silicate and Pt ion-exchange carried MFI zeolite and the binder was approximately 9 : 1, and the total amount of meso-porous silicate and Pt ion-exchange carried MFI zeolite was 30 weight % relative to the catalyst support member 1 whose wight per one litter was 450 g (which is hereafter expressed as 0.5 g/L). The catalyst had a platinum content of 0.5 g per one litter of the catalyst support member 1 and contained less than 1 % of impurities.

Figure 2 shows a mixed type catalyst of a second example (Ex-II) in accordance with an embodiment of the invention. The catalyst was comprised of a single layer of a mixture of Pt ion-exchange carried MFI zeolite 3 and Ce carried meso-porous silicate 4 coated on a catalyst support member 1 such as a cordierite honeycomb bed. The catalyst was produced under the same conditions and in the same manner as the first example of mixed type catalyst. The catalyst had a ceria content in terms of a cerium content of 30 g/L. The mixture ratio and the total amount of Pt ion-exchange carried MFI zeolite 3 and Ce carried meso-porous silicate 4, and the platinum content were the same as those of the first example of mixed type catalyst. The catalyst contained less than 1 % of impurities.

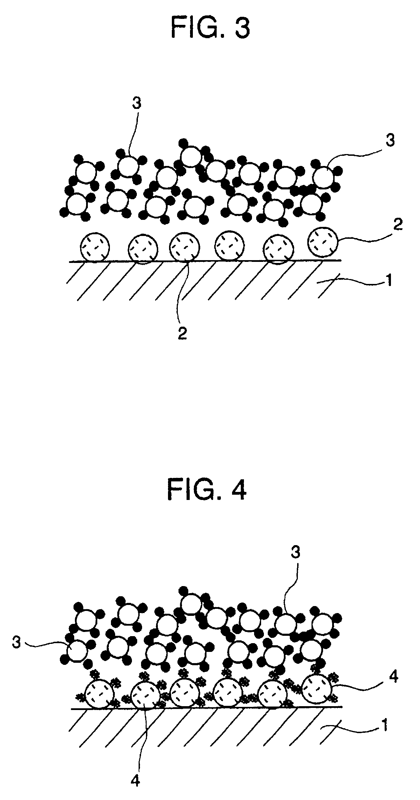

Figure 3 shows a multiple layer type catalyst of a third example (Ex-III) in accordance with an embodiment of the invention. The catalyst was comprised of an under layer of meso-porous silicate 2 coated on a catalyst support member 1 such as a cordierite honeycomb bed and an over layer of Pt ion-exchange carried MFI zeolite 3.

A meso-porous silicate mixture was prepared by mixing meso-porous silicate and a binder at a weight ratio of, for example, 9 : 1, and then added with distilled water. After wash-coated on the catalyst support member 1, the coated layer of the mixture slurry was dried at approximately 150°C and further burnt at approximately 300°C as the under layer. An over layer of Pt ion-exchange carried MFI zeolite mixture was formed under the same conditions and in the same manner as the under layer of meso-porous silicate. The mixture ratio and the total amount of Pt ion-exchange carried MFI zeolite 3 and meso-porous silicate 2, and the platinum content were the same as those of the first example of mixed type catalyst. The catalyst contained less than 1 % of impurities.

Figure 4 shows a multiple layer type catalyst of a fourth example (Ex-IV) in accordance with an embodiment of the invention. The catalyst was comprised of an under layer of Ce carried meso-porous silicate 4 coated on a catalyst support member 1 such as a cordierite honeycomb bed and an over layer of Pt ion-exchange carried MFI zeolite 3.

The catalyst was prepared under the same conditions and in the same manner as the third example of multiple layer type catalyst. The mixture ratio and the total amount of Pt ion-exchange carried MFI zeolite and Ce carried meso-porous silicate, and the platinum content were the same as those of the first example of mixed type catalyst. The catalyst had a ceria content in terms of a cerium content of 30 g/L and contained less than 1 % of impurities.

Reversely multiple layer type catalysts of fifth and sixth examples (Ex-V and Ex-VI) in accordance with embodiments of the invention were further prepared and had the same layers but reversely stratified as those of the third and fourth examples of multiple layer type catalysts, respectively.

Each catalyst was prepared under the same conditions and in the same manner as the previous examples. The mixture ratio and the total amount of Pt ion-exchange carried MFI zeolite and meso-porous silicate or of Pt ion-exchange carried MFI zeolite and Ce carried meso-porous silicate, and the platinum content were the same as those of the third or the fourth example of multiple layer type catalyst. The sixth example of multiple layer type catalyst had a ceria content in terms of a cerium content of 30 g/L. Each of the fifth and sixth examples of multiple layer type catalysts contained less than 1 % of impurities.

Two comparative catalysts were prepared. First comparative catalyst (C-1) was comprised of 30 weight % Pt ion-exchange carried MFI zeolite only supported on a catalyst support member 1 such as a cordierite honeycomb bed. Second comparative catalyst (C-2) was comprised of 30 weight % Pt dry-solidify carried MFI zeolite only supported on a catalyst support member 1 such as a cordierite honeycomb bed. Each comparative catalyst had a platinum content of 0.5 g/L.

Comparative tests were conducted to evaluate nitrogen oxide (NOx) conversion efficiency and low temperature activity. For each of the first to sixth example catalysts and first and second comparative catalysts, mean NOx conversion efficiency of measurements at 250°C, 275°C and 300°C was calculated. The utilization was made of a simulated exhaust gas containing 170 ppmC propylene, 170 ppm nitrogen oxides (NOx), 200 ppm carbon monoxide (CO), 100 ppm sulfur dioxide (SO₂) and 10 % oxygen (O₂). The simulated exhaust gas was supplied to a test catalyst at a space velocity of 85000/h. Further, for each catalyst, T-50 temperature was measured regarding hydrocarbons (HC) and carbon monoxide (CO). As well known in the art, the term "T-50 temperature" means a converter inlet temperature of exhaust gas at which a catalyst shows 50% conversion efficiency. An engine bench test was employed for low temperature activity measurements.

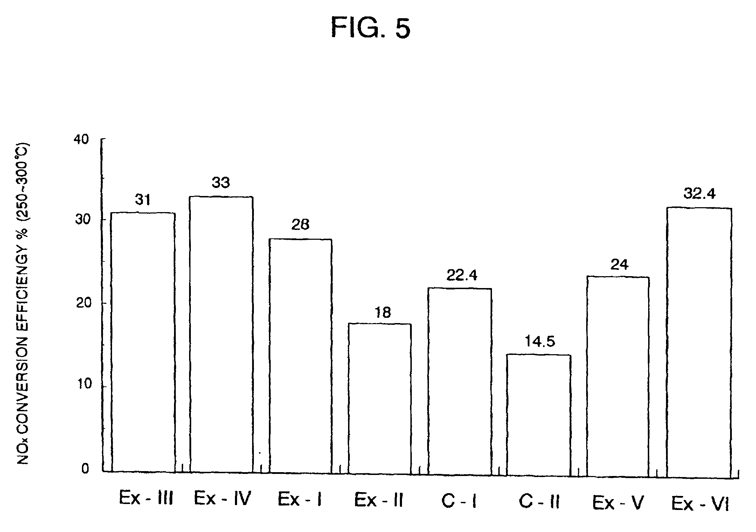

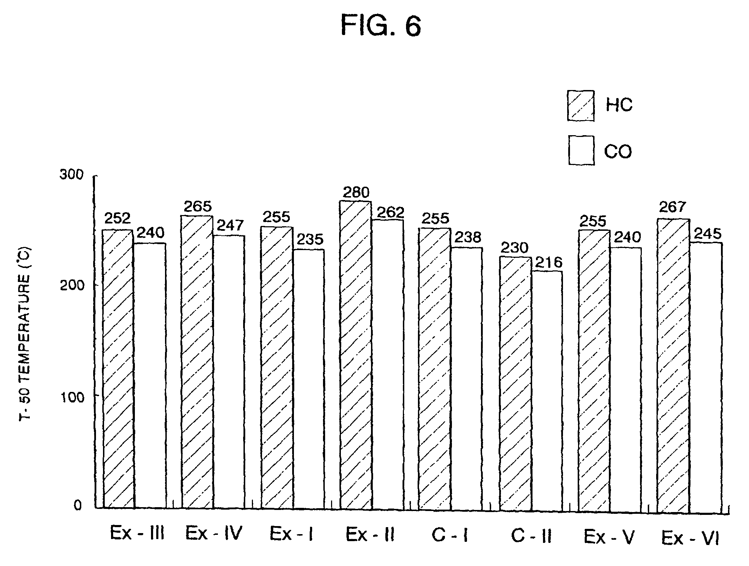

The results of these tests are shown in Figures 5 and 6.

As revealed in Figure 5, excepting the example catalyst Ex-II, the example catalysts show NOx conversion efficiency significantly higher than those of the comparative catalysts. This results from an effect of a compound of meso-porous silicate and MFI zeolite. It is thought as a reason for lower NOx conversion efficiency of the example catalyst Ex-II that there is an undesirable interaction between cerium (Ce) and platinum (Pt) in zeolite. It is understood that the multiple layer type catalysts have higher NOx conversion efficiency than the mixture type catalysts. This is regarded because large hydrocarbons (HC) captured by meso-porous silicate due to stratification are efficiently cracked by the over layer of MFI type zeolite and utilized to convert nitrogen oxides (NOx). It is characteristic that the multiple layer type catalyst containing cerium (Ce) show higher NOx conversion efficiency. The reversed multiple layer type catalyst shows NOx conversion efficiency lower than the multiple layer type catalyst. This is regarded because that the MFI type zeolite is put relatively hard to contact exhaust gases.

As revealed in Figure 6, it is apparent that there is no difference in T-50 temperature. This teaches that even mixing meso-porous silicate or cerium contained meso-porous with the catalyst of MFI type zeolite or laying it on the catalyst of MFI type zeolite does not cause a reduction in low temperature activity regarding hydrocarbons (HC).

Evaluation was conducted for onboard example and comparative catalysts. Each of the multiple layer type catalyst Ex-III and the comparative catalyst C-1 was placed in an exhaust pipe of a 1.9 litter turbo-charged, fuel direct injection diesel engine. NOx conversion efficiency was 34% for the multiple layer type catalyst Ex-III and 25% for the comparative catalyst C-I when measurements were made while the engine run in an N-EC mode. From the results, it was ascertained that the onboard catalyst of the invention was significantly useful.

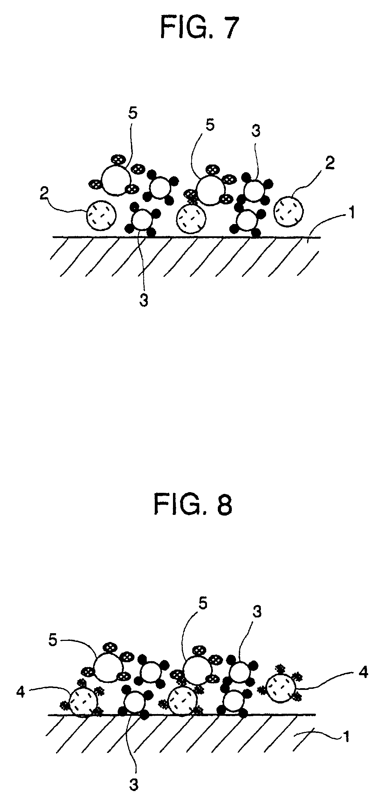

Figure 7 shows a mixed type catalyst of a seventh example (Ex-VII) in accordance with an embodiment of the invention. The catalyst was comprised of a mixture of Pt dry-solidify carried MFI zeolite 5, meso-porous silicate 2 and Pt ion-exchange carried MFI zeolite 3 coated on a catalyst support member 1 such as a cordierite honeycomb bed.

A catalyst mixture prepared by mixing Pt ion-exchange carried MFI zeolite 3 and Pt dry-solidify carried MFI zeolite 5 at a weight ratio of 1 : 1 was added with meso-porous silicate at a weight ratio of 4 : 1. The catalyst was coated on the catalyst support member 1 under the same conditions and in the same manner as the first and second examples of mixture type catalysts. The total weight ratio of the catalyst was 30% of the catalyst support member 1. The platinum content of Pt ion-exchange carried MFI zeolite 3 was 1 g/L, and the platinum content of Pt dry-solidify carried MFI zeolite 5 was 0.25 g/L.

Figure 8 shows a mixed type catalyst of a eighth example (Ex-VIII) in accordance with an embodiment of the invention. The catalyst was comprised of a mixture of Pt ion-exchange carried MFI zeolite 3, Ce carried meso-porous silicate 4 and Pt dry-solidify carried MFI zeolite 5 coated on a catalyst support member 1 such as a cordierite honeycomb bed.

The catalyst was prepared and coated on the catalyst support member 1 under the same conditions and in the same manner as the seventh example of mixture type catalyst. The catalyst had a ceria content in terms of a cerium content of 30 g/L.

A multiple layer type catalyst of a ninth example (Ex-IX) in accordance with an embodiment of the invention was prepared. The catalyst was comprised of an under layer of meso-porous silicate and an over layer of a mixture of Pt ion-exchange carried MFI zeolite and Pt dry-solidify carried MFI zeolite. Excepting that Pt ion-exchange carried MFI zeolite and Pt dry-solidify carried MFI zeolite were mixed at a weight ratio of 1 : 1, the ninth example catalyst was prepared and coated on a catalyst support member such as a cordierite honeycomb bed under the same conditions and in the same manner as the multiple layer type catalyst described above.

A multiple layer type catalyst of a tenth example (Ex-X) in accordance with an embodiment of the invention was prepared. The catalyst was comprised of an under layer of Ce carried meso-porous silicate and an over layer of a mixture of Pt ion-exchange carried MFI zeolite and Pt dry-solidify carried MFI zeolite. Excepting that Pt ion-exchange carried MFI zeolite and Pt dry-solidify carried MFI zeolite were mixed at a weight ratio of 1:1, the tenth example catalyst was prepared and coated on a catalyst support member such as a cordierite honeycomb bed under the same conditions and in the same manner as the fifth example of multiple layer type catalyst.

Further, four comparative catalysts were prepared. Third comparative catalyst (C-3) was comprised of 30 weight % Pt ion-exchange carried MFI zeolite only supported on a catalyst support member such as a cordierite honeycomb bed. The comparative catalyst had a platinum content of 0.5 g/L. Fourth to sixth comparative catalysts (C-4, C-5 and C-6, respectively) were comprised of 30 weight % Pt dry-solidify carried MFI zeolite only supported on a catalyst support member such as a cordierite honeycomb bed. These comparative catalysts had platinum contents of 0.5 g/L, 1.0 g/L and 2.0 g/L, respectively.

Comparative tests were conducted for the fifth to tenth example catalysts and the third to sixth comparative catalysts to evaluate nitrogen oxide (NOx) conversion efficiency and low temperature activity in the same conditions and the same manner as for the first to fourth example catalysts and the first and second comparative catalysts.

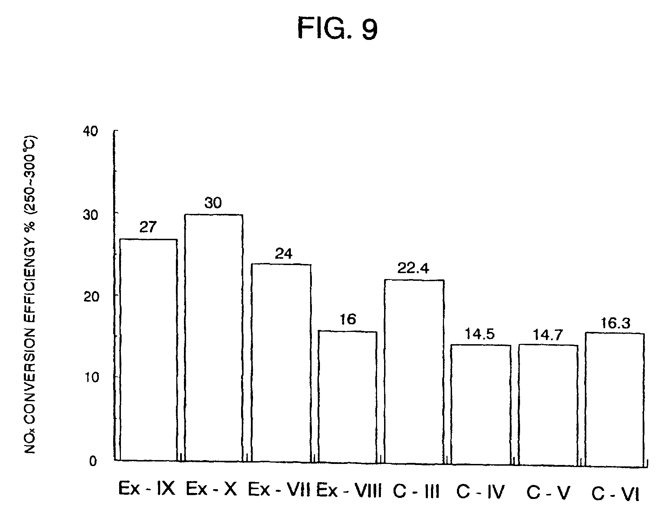

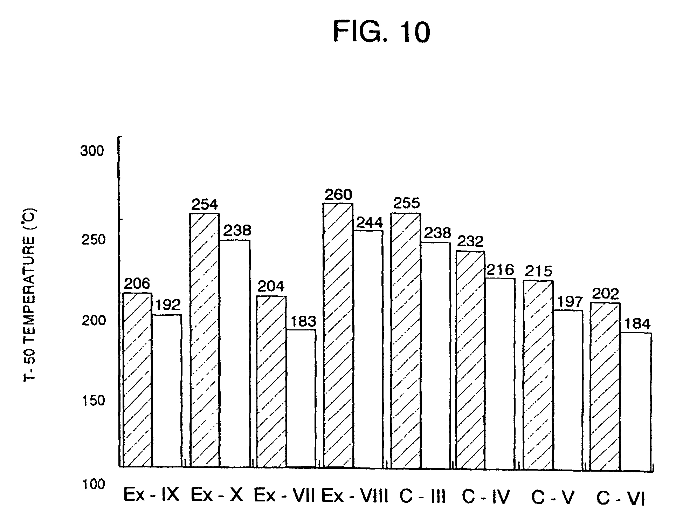

The results of these tests are shown in Figures 9 and 10.

As revealed in Figure 9, excepting the example catalyst Ex-VIII, the example catalysts show NOx conversion efficiency significantly higher than those of the comparative catalysts. It is also revealed that the multiple layer type catalysts have higher NOx conversion efficiency than the mixed type catalyst and that the multiple layer type catalyst containing cerium (Ce) shows the highest NOx conversion efficiency. From the result, it can be said that the catalyst using both Pt ion-exchange carried MFI zeolite and Pt dry-solidify carried MFI zeolite has the tendency as the catalyst using Pt ion-exchange carried MFI zeolite only.

As revealed in Figure 10, it is apparent that the catalysts containing no cerium, whether it is of a mixed type or a multiple layer type, show significantly low T-50 temperatures. Accordingly, in order to rise low temperature activity for hydrocarbons (HC) and the like as well as improving NOx conversion efficiency, it is preferable to use both Pt ion-exchange carried MFI zeolite and Pt dry-solidify carried MFI zeolite and it is however undesirable to use meso-porous silicate containing cerium.

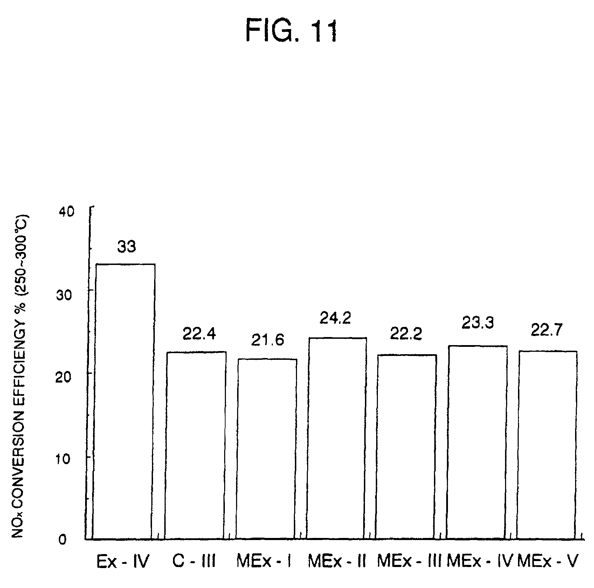

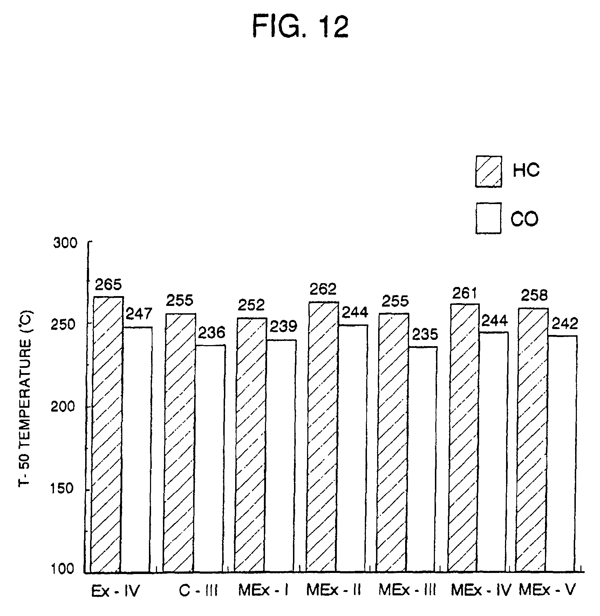

In order to evaluate the effect of Ce carried meso-porous silicate, first to five modified example catalysts MEx-I - MEx-V were prepared by replacing Ce carried meso-porous silicate 4 for the under layer 10a of the fourth example catalyst Ex-IV, which has the highest NOx conversion efficiency, with aluminum oxide (Al₂O₃), ceria (CeO₂), MFI type zeolite of an Al₂O₃/SiO₂ ratio of 30, FAU type zeolite of an Al₂O₃/SiO₂ ratio of 30, and β-zeolite of an Al₂O₃/SiO₂ ratio of 25, respectively. Each modified example catalyst was the same in upper layer structure and had the same cerium content as the fourth example catalyst Ex-IV. The results of the evaluation tests are shown together with the results for the fourth example stratified catalyst IV and the comparative catalyst C-III in Figures 11 and 12.

As revealed in Figure 11, it is apparent that the fourth example multiple layer type catalyst IV shows the highest NOx conversion efficiency and there is no difference in NOx conversion efficiency among the modified example catalysts MEx-I - MEx-V. The fact that even when the utilization is made of materials other than meso-porous silicate as a carrier for cerium in the under layer, there is no effect on improvement of NOx conversion efficiency provides a corollary that meso-pores of the silicate do an excellent job of improving NOx conversion efficiency, which is due to large hydrocarbons (HC) captured by the meso-porous silicate in the under layer.

As revealed in Figure 12, it is apparent that there is no significant difference in T-50 temperature among the modified example catalysts MEx-I - MEx-V and the example catalysts IV and the comparative catalyst C-III and consequently the utilization of meso-porous silicate has no effect on T-50 temperature.

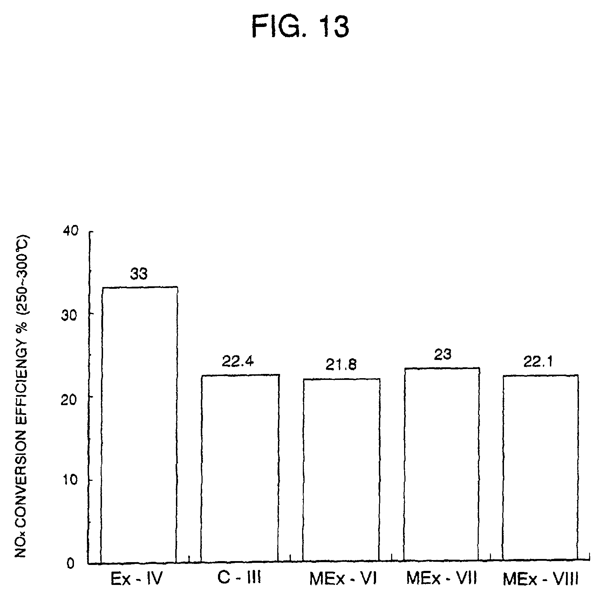

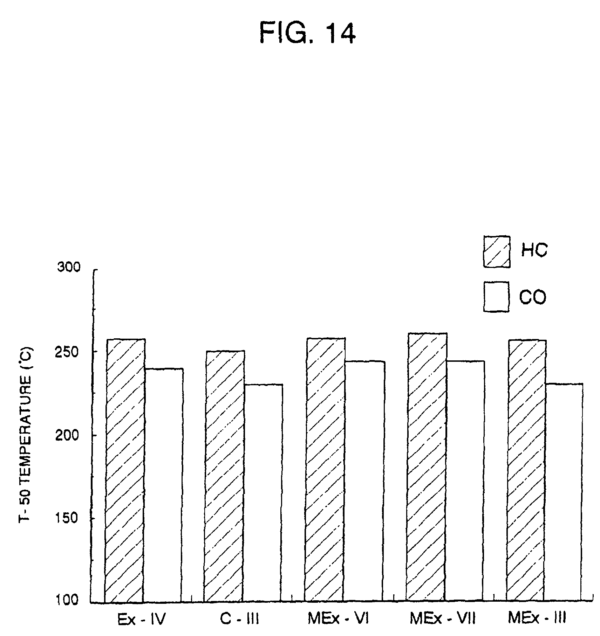

Further evaluation was conducted to ascertain the effect of cerium in the under layer of meso-porous silicate as to sixth to eighth modified example catalysts MEx-VI - MEx-VIII. The sixth to eighth modified example catalysts MEx-VI - MEx-VIII were prepared by replacing cerium (Ce) in the cerium contained meso-porous silicate 4 for the under layer 10a of the fourth example stratified catalyst Ex-IV with zirconium oxide (ZrO₂), compound oxide of ceria (CeO₂) and zirconium oxide (ZrO₂) mixed at a weight ratio of 3 : 1, and compound oxide of ceria (CeO₂) and zirconium oxide (ZrO₂) mixed at a weight ratio of 9 : 1, respectively. Each modified example catalyst was the same in upper layer structure and had the same zirconium oxide as the cerium content of the fourth example catalyst Ex-IV. The results of the evaluation tests are shown together with the results for the fourth example stratified catalyst IV and the comparative catalyst C-III in Figures 13 and 14.

As revealed in Figure 13, it is apparent that the fourth example multiple layer type catalyst IV shows the highest NOx conversion efficiency among them and there is no difference in NOx conversion efficiency among the modified example catalysts MEx-VI-MEx-VIII. The fact that the utilization of materials other than cerium in the under layer of meso-porous silicate does not effect on improvement of NOx conversion efficiency provides a corollary that cerium (Ce) does an excellent job of cracking hydrocarbons (HC) captured by meso-pores of the silicate.

As revealed in Figure 14, it is apparent that there is no significant difference in T-50 temperature among the modified example catalysts MEx-VI - MEx-VIII and the example catalysts IV and the comparative catalyst C-III and consequently the utilization of meso-porous silicate has no effect on T-50 temperature. Accordingly, it can be said that the utilization of cerium has no effect on low temperature activity.

The utilization may be made of a volatilize-solidify method, in place of the spray-dry method or the ion-exchanging method, to carry platinum by MFI type zeolite with the same effect. In the volatilize-solidify method, a mixture of MFI type zeolite powder and a platinum solution is heated to volatilize volatile components.

In place of installing an integrated mixture type catalyst or an integrated multiple layer type catalyst in the exhaust line, it may be done to place separately meso-porous silicate or Ce carried meso-porous silicate upstream from Pt carried MFI type zeolite in the exhaust line.

It is to be understood that although the present invention has been described with regard to preferred embodiments thereof, various other embodiments and variants may occur to those skilled in the art, which are within the scope of the invention, and such other embodiments and variants are intended to be covered by the following claims.

## Claims

1. An exhaust gas purifying catalyst for purifying exhaust gases from an automobile engine, said exhaust gas purifying catalyst comprising:
a catalytic component comprised of a noble metal supported on MFI type zeolite (3) by an ion-exchange method; and
a mesopore silicate (2, 4) having an approximately uniform size of meso-pores.

2. The exhaust gas purifying catalyst as defined in claim 1, wherein said meso-porous composition supports ceria thereon.

3. The exhaust gas purifying catalyst as defined in one of the preceding claims, and further comprising another catalytic component comprised of an active metal supported on zeolite without using an ion-exchange method.

4. The exhaust gas purifying catalyst as defined in claim 3, wherein said active metal of said second catalytic component is supported on said zeolite (3) by a vaporization-dry method.

5. The exhaust gas purifying catalyst as defined in claim 3, wherein said active metal of said second catalytic component is supported on said zeolite (3) by a spray-dry method.

6. The exhaust gas purifying catalyst as defined in one of the preceding claims, wherein said engine is a diesel engine.

7. The exhaust gas purifying catalyst as defined in one of the preceding claims, wherein said mesopore composition is coated as an underlayer on a support member (1) and said catalytic component is coated as an overlayer over said mesopore composition underlayer.

## Patentansprüche

1. Abgasreinigungskatalysator zum Reinigen von Abgasen aus einem Kraftfahrzeugmotor, wobei der Abgasreinigungskatalysator Folgendes umfasst:
eine katalytische Komponente, umfassend ein Edelmetall, getragen von einem Zeolith-(3) vom MFI-Typ mittels eines lonenaustauschverfahrens; und
ein mesopores Silicat (2,4) mit einer annähernd gleichmäßigen Größe von Mesoporen.

2. Der Abgasreinigungskatalysator gemäß Anspruch 1, wobei die mesoporöse Zusammensetzung Ceroxid darauf trägt.

3. Abgasreinigungskatalysator nach mindestens einem der vorhergehenden Ansprüche, und weiterhin umfassend eine weitere katalytische Komponente, umfassend ein aktives Metall, getragen auf Zeolith ohne die Anwendung eines lonenaustauschverfahrens.

4. Abgasreinigungskatalysator gemäß Anspruch 3, wobei das aktive Metall der zweiten katalytischen Komponente von dem Zeolith (3) durch ein Verdampfungstrocknungsverfahren getragen wird.

5. Abgasreinigungskatalysator gemäß Anspruch 3, wobei das aktive Metall der zweiten katalytischen Komponente von dem Zeolith (3) durch ein Sprühtrocknungsverfahren getragen wird.

6. Abgasreinigungskatalysator nach mindestens einem der vorhergehenden Ansprüche, wobei der Motor ein Dieselmotor ist.

7. Abgasreinigungskatalysator nach mindestens einem der vorhergehenden Ansprüche, wobei die mesoporöse Zusammensetzung als eine Unterschicht auf ein Trägerteil (1) aufbeschichtet ist und die katalytische Komponente als eine Deckschicht über der Unterschicht aus einer mesoporen Zusammensetzung beschichtet ist.

## Revendications

1. Catalyseur de purification de gaz d'échappement destiné à purifier les gaz d'échappement d'un moteur d'automobile, ledit catalyseur de purification de gaz d'échappement comprenant :
un composant catalytique composé d'un métal noble supporté sur une zéolite de type MFI (3) par un procédé d'échange ionique ; et
un silicate mésoporeux (2, 4) ayant une dimension des mésopores approximativement uniforme.

2. Catalyseur de purification de gaz d'échappement selon la revendication 1, dans lequel ladite composition mésoporeuse supporte de la cérine sur celle-ci.

3. Catalyseur de purification de gaz d'échappement selon l'une quelconque des revendications précédentes, et comprenant en outre un autre composant catalytique composé d'un métal actif supporté sur une zéolite sans utiliser un procédé d'échange ionique.

4. Catalyseur de purification de gaz d'échappement selon la revendication 3, dans lequel ledit métal actif dudit second composant catalytique est supporté sur ladite zéolite (3) par un procédé de vaporisation-séchage.

5. Catalyseur de purification de gaz d'échappement selon la revendication 3, dans lequel ledit métal actif dudit second composant catalytique est supporté sur ladite zéolite (3) par un procédé de pulvérisation-séchage.

6. Catalyseur de purification de gaz d'échappement selon l'une quelconque des revendications précédentes, dans lequel ledit moteur est un moteur diesel.

7. Catalyseur de purification de gaz d'échappement selon l'une quelconque des revendications précédentes, dans lequel ladite composition mésoporeuse est enduite en tant que couche inférieure sur un élément de support (1) et ledit composant catalytique est enduit en tant que couche supérieure sur ladite couche inférieure de la composition mésoporeuse.
